# EUROPEAN PATENT APPLICATION

(11) **EP 1 192 863 A2**
(43) Date of publication of application: **03.04.2002**
(21) Application number: 01500230.6
(22) Date of filing: 19.09.2001
(51) Int. Cl.: A21C 9/08

(54) **Apparatus for the automatic rotation of bakery doughs during their manufacture**

(30) Priority: 28.09.2000 ES 200002344
(71) Applicant: Lozano Soriano, Angel, 08210 Barbera Del Valles (Barcelona) (ES)
(72) Inventor: Lozano Soriano, Angel, 08210 Barbera Del Valles (Barcelona) (ES)
(74) Representative: Duran Moya, Carlos

(57) **Abstract**

The apparatus comprises a plurality of individual units for gripping individual laminar pieces of dough which are arranged on the belt conveying the latter, during the course of movement of said conveyor belt, said individual units being grouped into a variable number of rows, with separations between the rows and the individual units which correspond to that of the pieces of dough on the conveyor belt, and said cross-members being associated with means for the longitudinal movement thereof in the same direction of movement as the belt carrying the pieces of dough, and there being means for effecting the individual gripping, rotation on the conveyor belt, and subsequent release of each of the pieces of dough.

## Description

The present invention relates to an apparatus for the automatic rotation of bakery doughs during their manufacture, which provides significant features of novelty and inventive step to the function for which it is intended.

In the manufacture of bakery articles such as croissants it is the custom to start from a sheet of dough which extends continuously on a conveyor belt on which it is cut into portions, and these are afterwards aligned in rows and columns in order to continue with the process of preparation of the dough. In order to derive greater benefit from the die-stamping operation, the starting laminar elements must be cut in reverse direction in the successive rows thereof, that is to say, the opposite way round, which requires their rotation afterwards in order to align said pieces in a longitudinal direction, all of them being presented to the successive phases, in which one of the most characteristic will be that of rolling up, which requires all the laminar pieces of dough to be oriented in the same way in order to be able to carry out uniformly the same operations of shaping said laminar pieces of dough.

The apparatus of the present invention is intended to carry out in a simple and efficient manner the operation of individual rotation of the laminar pieces of dough so that these remain arranged in a system of rows and columns on the conveyor belt such that all the individual elements for the doughs remain in the same arrangement.

In order fulfil its aims, the apparatus of the present invention has an assembly of individual units for rotating the pieces, arranged in the same distribution of rows and columns in which the pieces appear after they have been cut, such that the rotation units should be grouped into groups transverse to the belt conveying the mass of dough, so that each of said pieces of dough die-stamped from the continuous starting sheet is subjected, simultaneously with the rest, to the action of one of the rotation units, while movement on the conveyor belt is taking place, in order to avoid idle times. Each of the units for rotation of the dough elements comprises means for vertical gripping of the piece by means of an assembly of needles or similar elements in an arrangement perpendicular to the conveyor belt, which are capable of gripping individually, by piercing, each of the individual pieces of dough and afterwards, by the rotational movement of said units, to produce the resulting rotation of the piece of dough. Said piece of dough is then separated from the gripping and rotation unit, remaining arranged on the conveyor belt in the correct grouping of rows and columns and with equal arrangement for all the pieces of dough.

To obtain the due actuation of the gripping and rotation units, these will basically have the following three movements:
- Longitudinal translation parallel to the axis of the conveyor belt,
- Upward and downward movement of the gripping device for gripping the piece of dough, and
- Rotational movement of the gripping element for gripping the piece of dough in order to effect the rotation of said piece of dough in the desired direction and magnitude.

In order to achieve the three types of movement indicated, the assemblies of securing and rotation units corresponding to a row of pieces of dough are successively associated with one or the other of two transverse support bars or cross-members, which are moved in the direction of movement of the conveyor belt when said support bars or cross-members are associated with respective lateral endless chains which permit displacement in carousel form of said support bars or cross-members, that is to say, with one section parallel to the conveyor belt and in close proximity thereto in the active part and on the return to re-assume their original position by displacement along the upper section of the conveyor chains. The vertical movement of the gripper units, which have an assembly of fine needles for their introduction into the individual pieces of dough, is obtained by means of a linear lever or levers arranged in a longitudinal direction with respect to the conveyor belt which, combining with opposing springs of the individual units, permit the upward and downward movement necessary for the gripping and release of the pieces; finally, the rotational movement for rotating the individual pieces of dough is effected by the rotation of the disk, carrying the needles intended to penetrate the dough of the laminar pieces, about its own axis by the action of an arm integral with a transverse bar parallel to the support carrying the gripping and rotation units.

For greater understanding thereof, explanatory drawings of the apparatus of the present invention are appended by way of non-limiting explanatory example.

Figure 1 is a diagrammatic plan view of a section of conveyor belt showing the relative position of the different work stations.

Figure 2 shows a diagrammatic plan view of the arrangement of two supports and the respective conveyor chains.

Figure 3 shows a view in elevation representing in section a chain conveying assembly.

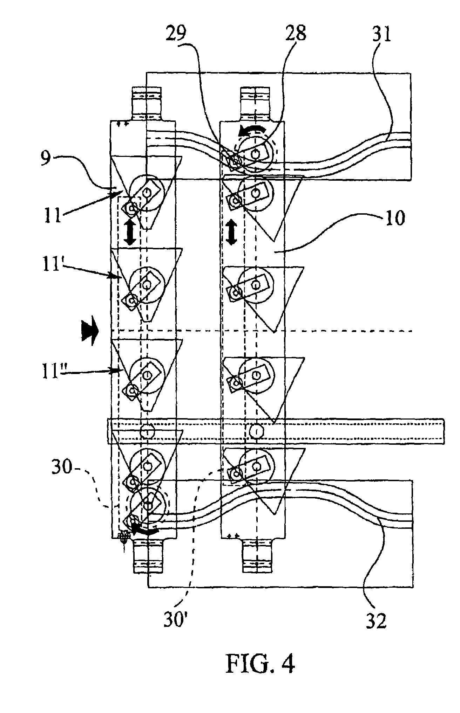

Figure 4 shows in plan view the arrangement of two support bars and the eccentric guides for producing the rotational movement of the units.

Figures 5 and 6 are respective details in section, in different planes, of one of the gripping and rotation units.

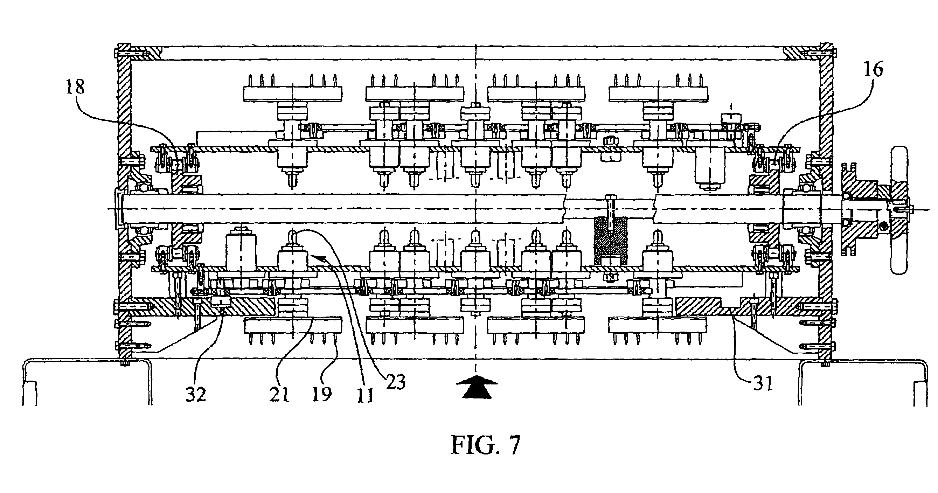

Figure 7 shows in detail a transverse section through the apparatus of the present invention.

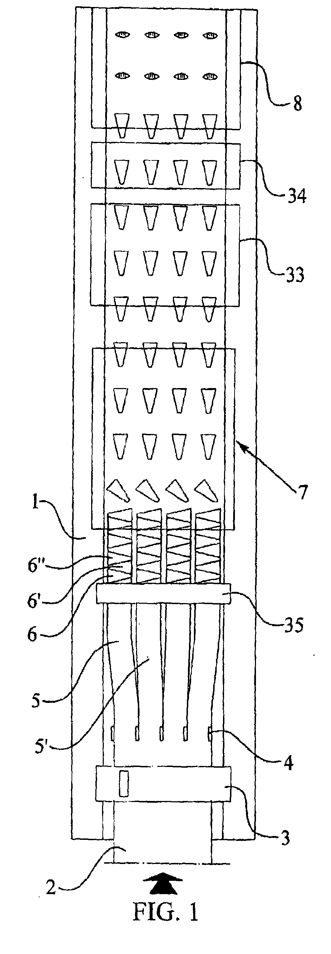

As can be seen in Figure 1, the manufacture of the bakery articles, for example croissants, will comprise a main conveyor belt 1 on which is arranged a starting sheet 2 of the width and thickness determined by a previous machine of the process, with subsequent flouring brush unit 3 and cutting disks 4 which divide the mass of dough 2 into a series of longitudinal strips such as 5, 5'... of the desired width, which can be separated transversely, as shown in the drawing, in order to have available the space necessary for handling, passing to a die-stamping unit 35 in which each of the individual strips is cut into a plurality of successive pieces such as those represented by the strip of material 5 and indicated by the numerals 6, 6', 6".... Each of said pieces assumes substantially the shape of a pointed regular trapezium, being arranged the opposite way round to one another in order to utilize the whole of the dough of each strip. The alignments of die-stamped pieces transported by the belt 1 then pass to the zone 7, in which the apparatus of the present invention will be provided in order to arrange the individual pieces of regular shape in rows and columns with uniform separations and likewise uniform orientation of the pieces, for example, as illustrated, so that on each trapezoidal piece the top is at the front and the bottom is at the rear. The correctly aligned pieces of dough will then be subjected to a calibrating step in the unit 33 and to other subsequent phases, such as a possible application of starch in the zone 34, and rolling up in the zone 8.

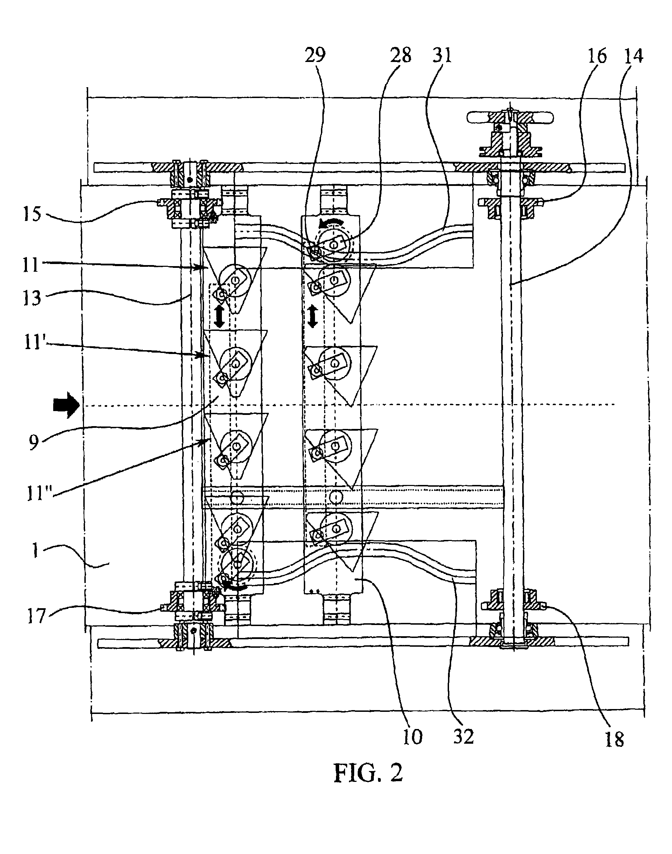

The apparatus of the present invention comprises a plurality of pairs of support cross-members, such as 9 and 10, illustrated in Figure 2, and variable in number, preferably a total of four, and each one carrying a series of gripping and rotation units evenly distributed along them which have been indicated by the numerals 11, 11', 11" for the support bar 9, it being understood that the number and relative separation of said units, and also of the support cross-members therefor, will correspond such that each of the dough pieces 6, 6', 6" is subjected to the action of one of the gripping and rotation units which will be described.

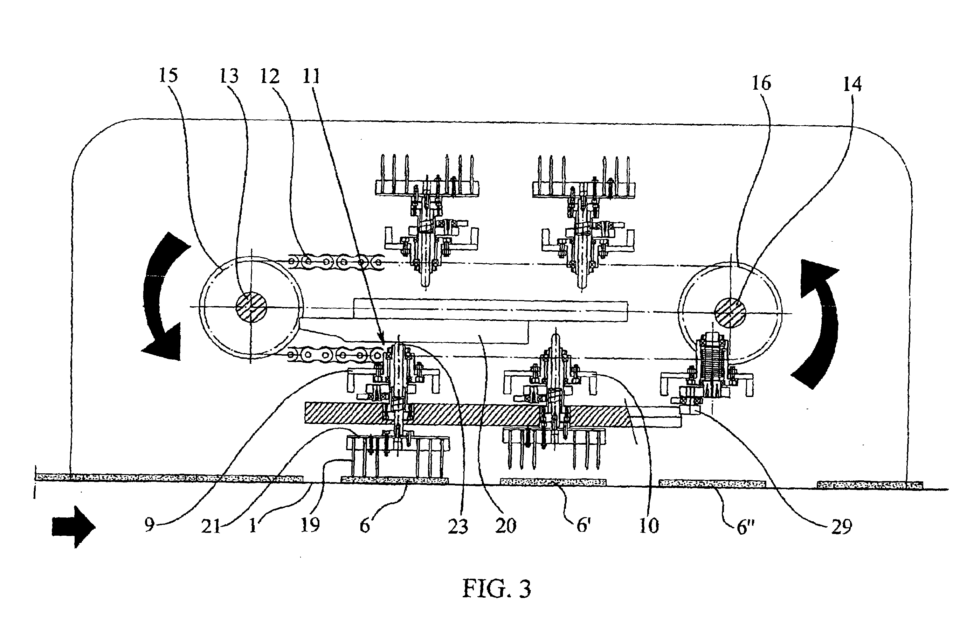

The support cross-members, such as 9 and 10, which will be provided in variable number, for example four, as illustrated in Figure 3, are incorporated in two conveyor chain assemblies such as that indicated by the numeral 12 in Figure 3, Figure 2 showing the transverse shafts 13 and 14 carrying the corresponding sprockets for the two chains, such as 15 and 16, for one of the laterals and 17 and 18 for the other, said chains permitting the synchronised displacement of the cross-members carrying the units 11, 11', 11"... In this way, the aforesaid units are displaced in the position which corresponds to the lower section of the chains, in proximity to the conveyor belt 1, being capable of securing and rotating the pieces of dough such as 6, 6', 6", indicated in Figures 1 and 3. For this purpose, each of said units 11, 11', 11" carries an assembly of needles or the like 19 capable of an upward and downward movement brought about by a linear lever 20 which forms part of the frame of the machine, in order to secure a piece, for example the piece 6 in Figure 3, and afterwards, by the action of the internal springs, release it, like the piece 6' in the same Figure 3, once rotation has taken place.

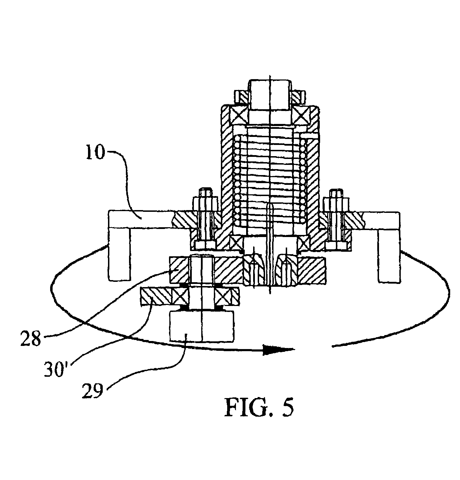

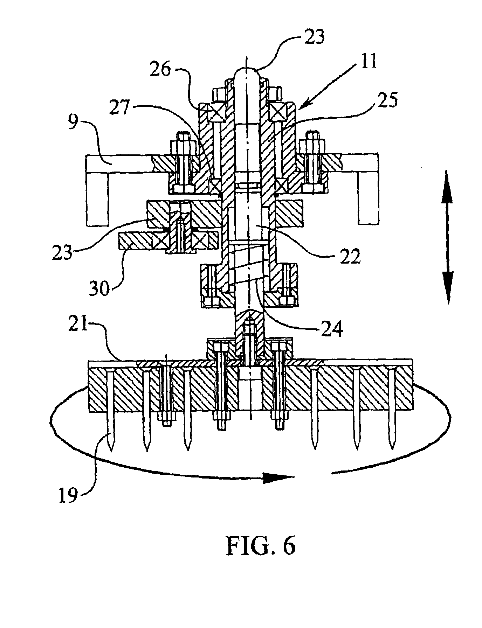

Figures 5 and 6 show in more detail the constitution of one of the units, indicated, for example, by the numeral 11. As will be seen in said drawings, for example in Figure 6, the needle assembly 19 is incorporated in a plate 21 capable of being moved vertically by the action of the rod 22, which by its upper end 23 is capable of receiving the action of the linear lever 20 and which further receives internally the action of an opposing spring 24, such that the vertical reciprocating movement of the plate 21 will be produced, which permits the gripping, the rotation, in the manner which will be explained below, and the release of each of the pieces of dough.

For the rotation of the pieces of dough, each of the units will be rotatable about the geometric axis of the rod 22, when the latter is mounted in the intermediate body 25, which can rotate on bearings such as 26 or 27, or other similar bearings, said rotation being produced by the rotation of an eccentric arm 28, fixed to each of said bodies, which in its turn receives the thrust of one or the other of the two transverse bars 30 and 30' integral with the different units, which has at the ends the rollers 29 capable of travelling along the shaped grooves 31 or 32, producing, owing to their curved shape, the necessary transverse displacement of the bars 30 and 30' and, therefore, the rotation of the individual units which, once the corresponding piece of dough is secured, will bring about its rotation at the required angle, as shown diagrammatically in the drawings, such that the transverse arrangement of the trapezoidal pieces which is shown in Figure 1 is transformed into a longitudinal arrangement as can be seen in the same Figure 1, after the formation of the rows.

By means of the arrangement explained, it is possible to secure and rotate the individual pieces of dough during their movement along the conveyor belt, so that, by combining the velocities and number of the cross-members carrying the individual units, it is possible to effect the rotation of the individual dough units without interfering in any way with the transport movements of the main conveyor, which results in a significant increase in the productivity of the machine for manufacturing bakery doughs.

## Claims

1. An apparatus for the automatic rotation of bakery doughs during their manufacture, **characterised in that** it comprises a plurality of individual units for gripping individual laminar pieces of dough arranged on the conveyor belt for the latter, during the course of the movement of said conveyor belt, said individual units being grouped into a variable number of rows with separations between the rows and the individual units which correspond to that of the pieces of dough on the conveyor belt, and said cross-members being associated with means for their longitudinal movement in the same direction of movement as the belt carrying the pieces of dough, and there being means for effecting the individual securing of each of the pieces of dough, their rotation on the conveyor belt, and subsequent release.

2. An apparatus for the automatic rotation of bakery doughs during their manufacture, according to claim 1, **characterised in that** the means for effecting the longitudinal movement of the cross-members carrying the units for securing and rotating the pieces of dough comprise roller chains or the like on which the ends of the cross-members are incorporated in order to obtain their displacement in a section adjacent to the belt conveying the pieces of dough, corresponding to the active positions of gripping and rotation of the latter, and on the return by the section remote from the conveyor belt.

3. An apparatus for the automatic rotation of bakery doughs during their manufacture, according to claim 1, **characterised in that** each of the units for gripping and rotating the pieces of dough has a support body on which is rotatably mounted an intermediate body carrying a rod sliding axially by the action of a linear lever of the frame of the machine and which carries, underneath, an assembly of needles for gripping, by piercing, the individual pieces of dough, said rod being subjected to the action of an opposing return spring and the intermediate body being integral with an arm capable of rotating about the geometric axis of the unit, effecting the rotation of the needles for gripping the piece and, therefore, the rotation of the latter at the desired angle on the conveyor belt.

4. An apparatus for the automatic rotation of bakery doughs during their manufacture, according to claim 3, **characterised in that** the rotation arms of the individual units are coupled alternately to transverse bars which are actuated longitudinally from one side or the other in order to effect the rotation of the successive alignments of pieces of dough.

5. An apparatus for the automatic rotation of bakery doughs during their manufacture, according to claim 4, **characterised in that** the transverse displacement of the bars articulated on the rotation arms of the individual units is effected by the movement of respective end rollers in curved grooves of the frame of the machine which follow the course required for effecting the transverse displacement of said connecting bars.
